# EUROPEAN PATENT APPLICATION

(11) **EP 4 817 755 A1**
(43) Date of publication of application: **07.10.2026**
(21) Application number: 25720230.9
(22) Date of filing: 17.03.2025
(51) Int. Cl.: B21D 43/10, B21D 43/18, B21D 7/04, B65G 47/92, B65G 47/90

(54) **SUPPLY APPARATUS AND CONTROL METHOD THEREOF**

(30) Priority: 11.02.2025 KR 20250017197
(71) Applicant: Nicemach Co., Ltd., Dalseong-gun, Daegu 42921 (KR)
(72) Inventor: PARK, Tae Gyu, Dalseong-gun, Daegu 42921 (KR)
(74) Representative: Isarpatent
(86) International application number: PCT/KR2025/003420
(87) International publication number: WO 2026/173137

(57) **Abstract**

According to an embodiment of the present disclosure, a feeding machine for supplying a workpiece to a bending machine is provided. The feeding machine comprises a base, A receiving portion is provided on the base to define a space in which the workpiece is loaded, A seating portion is provided on the base, on which the workpieces supplied to the bending machine are sequentially seated, A transfer portion is configured to grip the workpiece in the receiving portion from the center of the base and move it to the seating portion, A position adjusting portion is configured to allow the transfer portion to move in a front-rear direction of the base.

## Description

### TECHNICAL FIELD

The present disclosure relates to a feeding machine and a control method thereof.

### BACKGROUND ART

In manufacturing processes, a wire or pipe feeding machine (feeder) is an essential device, which requires continuous and precise feeding. Generally, such feeding machines include mechanical components such as rollers, guide rails, and clamps to control the position and direction of the wire or pipe. However, these machines are structurally complex, require periodic maintenance, and may suffer from operational instability under certain conditions.

In particular, when the workpieces are irregularly loaded or stacked in multiple layers, the performance of the feeding machine may be significantly reduced. The wire or pipe may become twisted or entangled, which can lead to a reduction in feeding speed and deterioration in product quality.

European Patent No. 1927412 discloses a technique to solve some of the problems in wire or pipe feeding machines. However, several key issues still remain. First, due to the complex mechanical structure, the cost of manufacturing and maintenance increases, and mechanical wear may occur during long-term use. Second, the design is insufficient to minimize mechanical interference during high-speed feeding, resulting in reduced system stability. Third, in cases where workpieces are irregularly placed, the structure has limitations in achieving accurate position control and stable feeding.

These issues can reduce the efficiency and stability of wire or pipe feeding machines, and therefore, continuous improvements in the related technology are required.

### DISCLOSURE

### Technical Problems

According to an embodiment of the present disclosure, it is an object to provide a bending apparatus capable of performing bending operations smoothly regardless of the length of the workpiece.

According to an embodiment of the present disclosure, a feeding machine capable of improving the transfer efficiency of a workpiece is provided.

In addition, a feeding machine capable of improving transfer accuracy is provided. Furthermore, a feeding machine capable of enhancing automation and productivity is provided.

Moreover, a feeding machine capable of ensuring device stability is provided.

### Technical Solutions

According to an aspect of the present disclosure, there is provided a feeding machine for feeding a workpiece to a bending machine, the feeding machine comprises a base, a receiving portion provided on the base to form a space in which the workpiece is loaded, a seating portion provided on the base, on which the workpieces fed to the bending machine are sequentially seated, a transfer portion configured to grip the workpiece in the receiving portion from the center of the base and move it to the seating portion and a position adjusting portion configured to allow the transfer portion to move in a front-rear direction of the base.

In one embodiment, the transfer portion may comprise a sensor portion for sensing a workpiece to be gripped, a magnetic portion for lifting the workpiece, and a finger portion for holding the lifted workpiece. The transfer portion may be configured to ascend and descend.

The sensor portion may comprise a contact portion configured to descend to contact and detect the workpiece, and an extension portion connected to the contact portion. The extension portion may be configured such that when the contact portion comes into contact with the highest-positioned workpiece among the workpieces, the contact portion is moved upward by the workpiece and the extension portion is ascended together with the contact portion to detect the position of the workpiece.

The magnetic portion may comprise a permanent magnet configured to lift the workpiece by magnetic force, and a rod portion configured to allow the permanent magnet to ascend and descend.

The feeding machine may further comprise a guide portion located at both ends of the transfer portion, the guide portion being configured to move in a direction away from the transfer portion from both sides of the portion of the workpiece gripped by the transfer portion.

The transfer portion may be configured to descend toward the receiving portion and ascend when it comes into contact with the highest-positioned workpiece among the workpieces so as to avoid contact, the transfer portion may also be configured to move in the front-rear direction to determine the position of the workpiece located at the height where contact occurred, the transfer portion may further be configured to move to the identified position and lift the workpiece via the magnetic portion, After the finger portion grips the workpiece, the transfer portion may move toward the seating portion to remove the workpiece from the transfer portion.

The finger portion may be opened to release the workpiece from the transfer portion, after the finger portion is opened, the contact portion may descend or the magnetic portion may ascend, as necessary, to discharge the workpiece to the seating portion.

In another aspect, there is provided a control method of the feeding machine.

The method may comprise causing the transfer portion to descend toward the receiving portion, and when it contacts the highest-positioned workpiece, causing the transfer portion to ascend to avoid contact, moving the transfer portion in the front-rear direction to identify the position of the workpiece located at the contact height, moving the transfer portion to the identified position and lifting the workpiece via the magnetic portion and after the finger portion grips the workpiece, transferring the workpiece to the seating portion and removing it from the transfer portion.

### Advantageous Effects

The feeding machine according to an embodiment of the present disclosure can improve the transfer efficiency of a workpiece.

In addition, transfer accuracy can be improved.

In addition, the feeding machine can enhance automation and productivity.

In addition, device stability can be ensured.

It is to be understood that the feeding machine according to an embodiment of the present disclosure may also exhibit other effects in addition to those described above.

### Description of Drawings

FIG. 1 is a view illustrating a feeding machine 100 according to an embodiment of the present disclosure.
FIG. 2 is a view illustrating a transfer portion and a guide portion rail according to an embodiment of the present disclosure.
FIG. 3 is a view illustrating the transfer portion according to an embodiment of the present disclosure.
FIGS. 4 to 6 are views illustrating the operation of the feeding machine according to an embodiment of the present disclosure.

### MODE FOR DISCLOSURE

Hereinafter, specific embodiments of the present invention will be described in detail with reference to the accompanying drawings. The following detailed description is provided to facilitate a comprehensive understanding of the methods, apparatuses, and/or systems described in this specification. However, it is merely illustrative and is not intended to limit the scope of the present invention.

In describing the embodiments of the present invention, detailed descriptions of related known technologies may be omitted if they are deemed to obscure the essence of the invention unnecessarily. Furthermore, the terms used hereinafter are defined in consideration of the functions of the invention, and their meanings may vary depending on the user's or operator's intentions or customary usage. Therefore, the definitions should be interpreted based on the overall content of this specification.

The terminology used in the detailed description is intended solely to describe particular embodiments and should not be construed as limiting. Unless clearly stated otherwise, singular forms include plural meanings. As used herein, terms such as "include" or "comprise" are intended to indicate the presence of stated features, integers, steps, operations, elements, or components, but do not preclude the presence or addition of one or more other features, integers, steps, operations, elements, or components.

In addition, terms such as "first," "second," and the like may be used for purposes of distinction, clarification, or convenience in description. For example, such terms may be used to distinguish identical functions based on positional or structural differences. Therefore, the use of such ordinal terms may be omitted where not necessary.

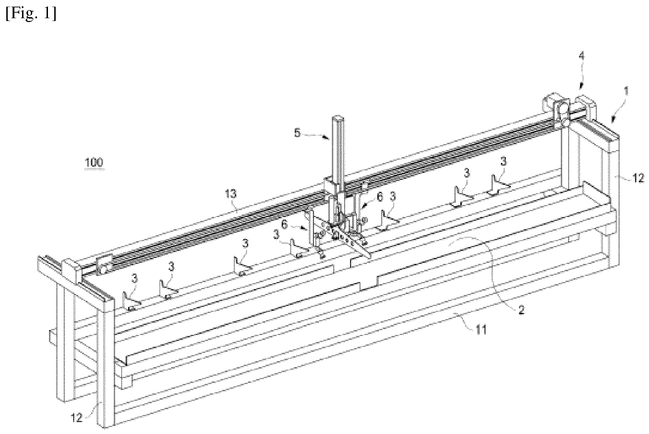

FIG. 1 is a view illustrating a feeding machine 100 according to an embodiment of the present disclosure.

Referring to FIG. 1, the feeding machine 100 according to an embodiment of the present disclosure comprises a base 1, a receiving portion 2, a seating portion 3, a position adjusting portion 4, and a transfer portion 5.

The base 1 is positioned on the ground and serves to support the components of the feeding machine 100, which will be described below. The base 1 may be provided in the form of a frame. Specifically, the base 1 may comprise a support frame 11 configured to support a load, a pair of side frames 12 provided at both ends of the support frame 11 and extending upward relative to the ground and an upper frame 13 supported by the side frames 12 and connected to upper sides of the pair of side frames 12.

The base 1 or the frames constituting the base 1 may be configured to allow other equipment or structures to be coupled. For example, recesses may be formed along the longitudinal direction of the frames.

The receiving portion 2 may be provided on the upper side of the support frame 11. The receiving portion 2 is merely required to provide a space for accommodating workpieces, and its shape is not particularly limited.

The receiving portion 2 may be disposed apart from the support frame 11. In this case, the receiving portion 2 may be provided on a middle frame located above the support frame 11.

In other words, the receiving portion 2 may be provided on the base 1 to form a space in which the workpieces are loaded.A plurality of workpieces may be irregularly loaded in the receiving portion 2.

For example, when the workpieces are round pipes having a diameter of 4 to 5 mm and a long length, a bundle of such workpieces may be placed on the receiving portion 2 in a tied state, and upon releasing the bundle, the workpieces may be scattered and irregularly arranged in the receiving portion 2.

The types of workpieces in the present specification are not limited. The workpieces only need to be graspable by the transfer portion described later, and are not limited in shape or material. Preferably, the workpieces may be in the form of long wires or pipes.

The seating portion 3 may be a portion where the workpieces are positioned before being fed to a bending machine (not shown). That is, the workpieces loaded in the receiving portion 2 may be moved by the transfer portion 5 and seated in the seating portion 3.

The seating portion 3 may be provided on one side of the support frame 11. This may allow the bending machine, which is not integrally provided, to easily access the seating portion.

Unlike in the receiving portion 2, the workpieces in the seating portion 3 may be arranged in a regular manner. This may be to enable accurate gripping of a single workpiece by a finger (not shown) or gripper (not shown, hereinafter collectively referred to as a "gripper") of the bending machine.

To this end, the seating portion 3 may be configured to support only a part of the workpiece, rather than the entire workpiece, so as to facilitate the entry of the gripper. That is, the seating portion 3 may be configured to support the middle and both sides of the workpiece. However, this is not limiting, and the seating portion 3 may be provided at equal or irregular intervals.

Each seating portion 3 may extend in the front-rear direction of the base 1 and be provided so as to be directed downward. This allows the transfer portion 5 to place the workpiece onto the seating portion 3, so that the workpiece may be guided by gravity regardless of its position.

The position adjusting portion 4 may be provided on the base 1 to enable the transfer portion 5 to move in the front-rear direction of the base 1.

Specifically, the position adjusting portion 4 may be provided on the upper frame 13 to allow the upper frame 13 to move along the longitudinal direction of the base 1. The transfer portion 5 may be positioned on the upper frame 13 of the base 1 as described later. Accordingly, when the upper frame 13 is moved, the transfer portion 5 may also move along with it.

The position adjusting portion 4 comprises a rail 42 positioned on the side frame 12 and a motor 41 configured to provide a driving force to move the upper frame 13 in the front-rear direction via the rail 42.

The position adjusting portion 4 may further comrprise a guide portion rail 43. The guide portion rail 43 may be a part where a guide portion 6, which will be described later, is positioned. The guide portion rail 43 may be located on the upper frame 13.

The guide portion rail 43 may be provided on one side of the upper frame 13. The guide portion rail 43 may be provided in the form of a conveyor belt.

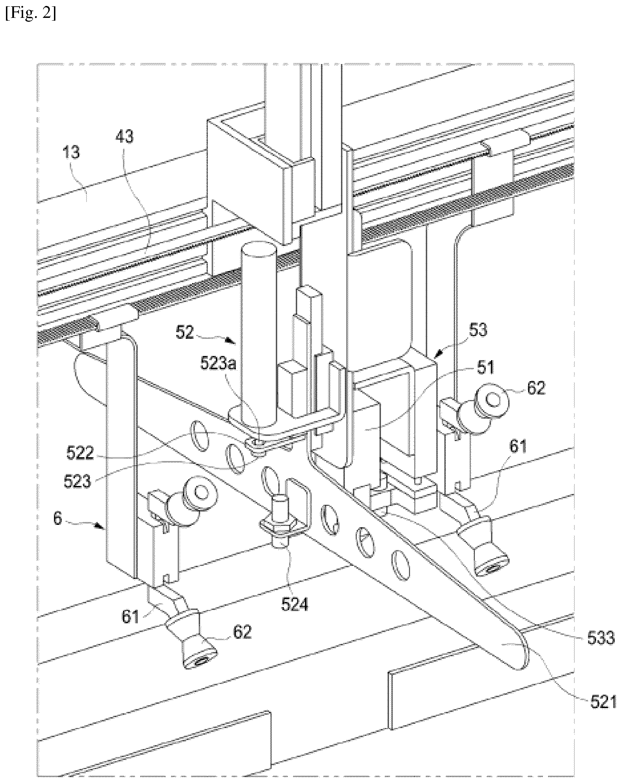

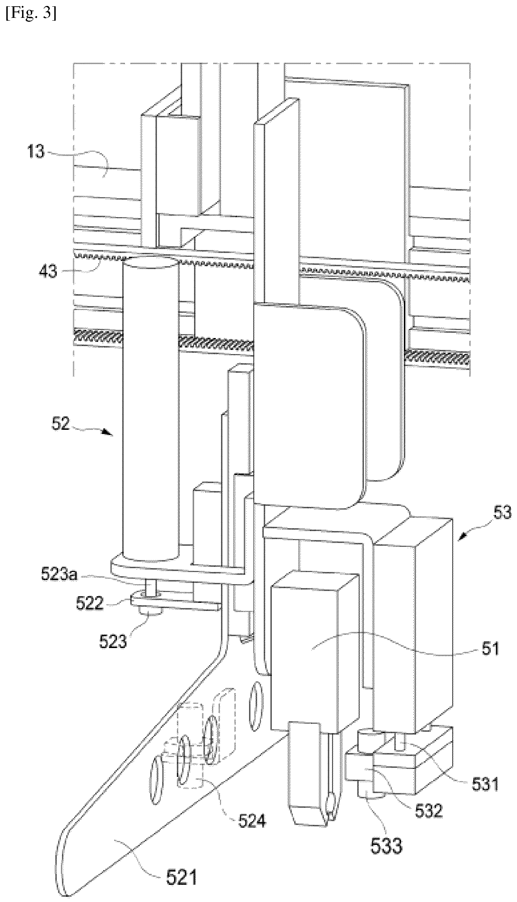

FIG. 2 is a view illustrating a form of a transfer portion and a guide portion rail according to an embodiment of the present disclosure, and FIG. 3 is a view illustrating the transfer portion according to an embodiment of the present disclosure.

Referring to FIGS. 2 and 3, a feeding machine 100 according to an embodiment of the present disclosure comprises a transfer portion 5.

The transfer portion 5 is a portion that grips the workpiece and moves the workpiece to the seating portion 3. The transfer portion 5 may be positioned at the center of the base 1. Specifically, it may be located at the center in the longitudinal direction of the base 1. More specifically, it is sufficient that it is located near the center in the longitudinal direction of the base 1. In the present specification, the term "center" refers not only to the exact center but also to the vicinity of the center.

The transfer portion 5 may be configured to be movable in the vertical direction. In detail, the transfer portion 5 may be configured to move in the height direction of the base 1.

This is to grip the workpiece located in the receiving portion 2 and move it to the seating portion 3.

The transfer portion 5 comprises a finger portion 51, a sensor portion 52, a magnetic portion 53, and a control portion (not shown).

The finger portion 51 is a portion that grips the workpiece and may be configured in the form of a clamp. The finger portion 51 may maintain an open or closed state electronically. That is, the finger portion 51 may be a portion that grips the workpiece lifted by the magnetic portion 53.

The sensor portion 52 refers to an assembly of various sensors and does not necessarily mean a single physical sensor. The sensor portion 52 may sense a workpiece.

Specifically, the sensor portion 52 may include a portion that moves toward the receiving portion 2, in which the workpieces are stacked, and senses the height of the workpieces. More specifically, when the workpieces are stacked in the receiving portion 2, the sensor portion 52 may sense the workpiece that is closest to the transfer portion 5. Since the transfer portion 5 is positioned near the center of the base 1, the sensor portion 52 may sense the uppermost workpiece located near the center along the longitudinal direction of the base 1. At this time, the end of the uppermost workpiece located at the center of the base 1 may be positioned lower than other workpieces. To address this, a guide portion 6 may be used. Details regarding this will be described later.

The sensor portion 52, the finger portion 51, and the magnetic portion 53 may each be configured in a modular form. Each of the sensor portion 52, the finger portion 51, and the magnetic portion 53 may be configured to ascend or descend toward the receiving portion 2 (in the height direction of the base 1).

The sensor portion 52 may comprise a contact portion 521 and an extension portion 522. The contact portion 521 may be configured to extend in the front-rear direction of the base 1. The contact portion 521 may be a part that contacts the workpiece. The extension portion 522 may be connected to the contact portion 521 and may be configured to move up and down together with the contact portion 521.

In other words, the sensor portion 52 may comprise a contact portion 521 configured to move downward and contact the workpiece to detect it, and an extension portion 522 connected to the contact portion 521 and configured to detect the position of the workpiece by being moved upward together with the contact portion 521 when the contact portion 521 comes into contact with the uppermost workpiece among the stacked workpieces.

The sensor portion 52 may further comprise a first position sensing portion 523 and a second position sensing portion 524.

The first position sensing portion 523 is a portion that detects the vertical position of the workpiece. The first position sensing portion 523 is a part that contacts the extension portion 522. When the contact portion 521, which will be described later, contacts and presses the workpiece, the extension portion 522 is separated from the first position sensing portion 523, and height information of the workpiece may be detected.

The second position sensing portion 524 is a portion that detects the position of the workpiece in the front-rear direction.

The second position sensing portion 524 may be positioned adjacent to the workpiece and may detect the workpiece located at the vertical position detected by the action of the first position sensing portion 523 and the extension portion.

When multiple workpieces are present at the vertical position determined by the separation between the first position sensing portion 523 and the extension portion 522, the second position sensing portion 524 may sense the position of the workpiece that is first detected according to the movement of the transfer portion 5.

At this time, the workpiece determined based on the sensing results of the first position sensing portion 523 and the second position sensing portion 524 may be transferred toward the bending machine.

In detail, when the contact portion 521 descends and presses the workpiece, the extension portion 522 is moved upward, and the sensor portion 52 detects this to determine the vertical position of the workpiece.

That is, while the contact portion 521 is descending, the extension portion 522 remains in contact with the first position sensing portion 523 of the sensor portion 52, and when the contact portion 521 contacts the workpiece and presses it, the extension portion 522 is separated from the first position sensing portion 523, thereby detecting the height of the workpiece based on the height direction of the base 1.

In other words, the sensor portion 52 may comprise a contact portion 521 configured to move downward and contact the workpiece to detect it, and an extension portion 522 connected to the contact portion 521 and configured to detect the position of the workpiece by being moved upward together with the contact portion 521 when the contact portion 521 comes into contact with the uppermost workpiece among the stacked workpieces.

The transfer portion 5 may comprise a magnetic portion 53. The magnetic portion 53 may be configured to ascend or descend in the height direction of the base 1.

The magnetic portion 53 may comprise, as needed, a permanent magnet 533, a rod portion 531, and a connection portion 532.

The magnetic portion 53 may is configured to lift the workpiece from the receiving portion 2.

The permanent magnet 533 may be provided to lift the workpiece. The permanent magnet 533 may be sized appropriately to lift the workpiece. In other words, the permanent magnet 533 may be configured to lift the workpiece by magnetic force.

At this time, in consideration of the height of the transfer portion 5, the magnetic portion 53 may comprise a rod portion 531 that protrudes from or retracts into a rod housing 530, and a connection portion 532 that connects the rod portion 531 and the permanent magnet 533.

In other words, the magnetic portion 53 may comprise a permanent magnet 533 configured to lift the workpiece by magnetic force, and a rod portion 531 configured to enable the permanent magnet 533 to ascend and descend.

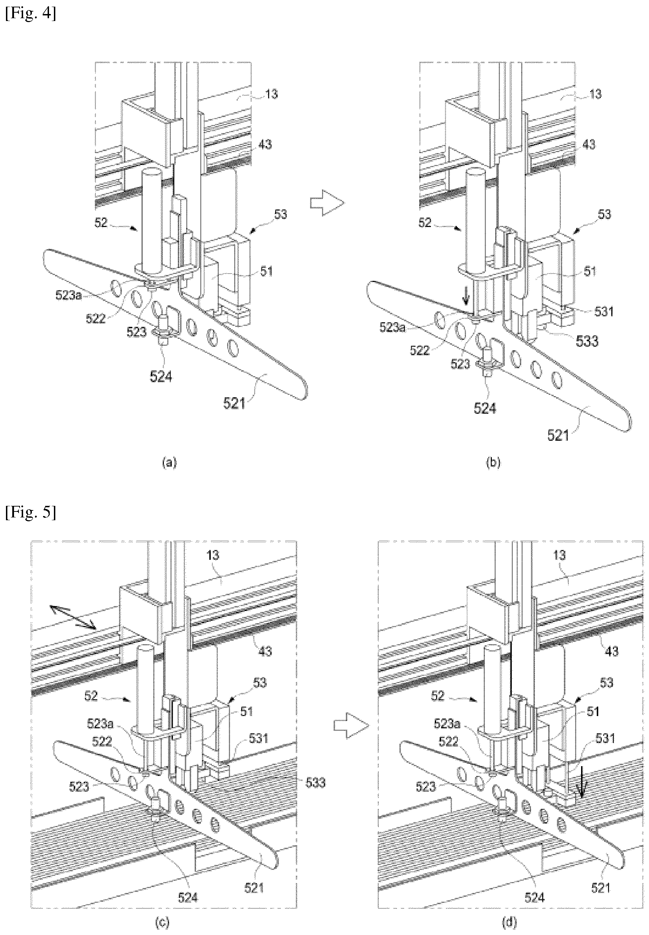

Referring to FIGS. 2 and 4, a feeding machine according to an embodiment of the present disclosure may comprise a guide portion.

The guide portion 6 may be positioned on both sides of the transfer portion 5. The guide portion 6 may be provided as a pair.

The guide portion 6 may support the workpiece from both sides as the transfer portion 5 lifts the workpiece and moves toward an end portion of the workpiece. In other words, the guide portion 6 may be positioned at both ends of the transfer portion 5 and configured to move away from the transfer portion 5 from both sides of the gripped portion when the transfer portion 5 grips the workpiece.

That is, the guide portion 6 may separate the workpiece to be guided to the bending machine from among the stacked workpieces.

The guide portion 6 may be configured to open and close like the finger portion described above. The guide portion 6 may comprise a pincer portion 61 configured in the form of a clamp, and a roller portion 62 provided at the end of the pincer portion 61.

The roller portion 62 may be provided in an hourglass shape with its center recessed inward. As a result, even if the workpiece is gripped relatively inaccurately, it may be guided toward the center.

The pincer portion 61 may be configured to close when the finger portion 51 of the transfer portion 5 grips the workpiece.

The pair of guide portions 6 may be seated on the guide portion rail 43. One of the guide portions 6 may be connected to the lower side of the guide portion rail 43, and the other may be connected to the upper side. Accordingly, as the guide portion rail 43 rotates in one direction, the pair of guide portions 6 may move away from each other or move toward the transfer portion 5.

There is no limitation on the movement method of the guide portion 6. It is sufficient that the pair of guide portions 6 move away from or toward the transfer portion 5 from both sides thereof.

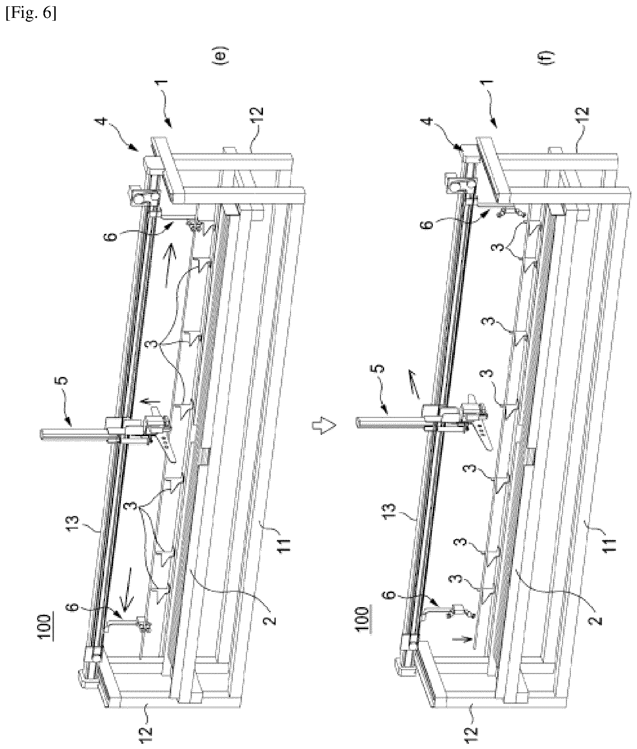

Referring to FIGS. 4 to 6, the operation of the feeding machine according to an embodiment of the present disclosure is described.

When workpieces are placed in the receiving portion 2, the transfer portion 5 is positioned above the workpieces. At this time, the sensor portion 52 of the transfer portion 5 may descend toward the workpieces. A bar 523a connected to the first position sensing portion 523 may move toward the receiving portion 2. The first position sensing portion 523 may remain in contact with the extension portion 522.

As the bar 523a continues to descend, the contact portion 521 may also descend.

When the contact portion 521 comes into contact with the workpiece, the extension portion 522 is separated from the first position sensing portion 523. The Z-axis coordinate (vertical direction of the base) at this point may be input into the control unit.

Subsequently, the bar 523a may ascend and the contact portion 521 may be slightly spaced apart from the workpiece. In a state where the transfer portion 5 is slightly separated from the workpiece, it may move in the front-rear direction of the base 1. This may be to detect the front-rear position of the workpiece to be transferred.

Specifically, since the bottom surface of the contact portion 521 is extended in the front-rear direction of the base 1, the vertical position (height direction) of the workpiece to be transferred can be identified, but its position in the front-rear direction may not. Therefore, to accurately identify the position of the workpiece to be transferred, it is necessary to determine its front-rear position relative to the base 1. Accordingly, the transfer portion 5 may move in the front-rear direction of the base 1 to detect the position of the workpiece.

That is, the transfer portion 5 may move in the front-rear direction of the base 1 to detect the front-rear position of the workpiece located at the previously detected height. When the transfer portion 5 moves in the front-rear direction of the base 1, it may detect the workpiece having the previously determined Z-axis height. The front-rear position of the workpiece may be detected by the second position sensing portion 524. There is no limitation on the form or method of the second position sensing portion 524.

Once the position of the workpiece is determined through the second position sensing portion 524, the transfer portion 5 may move to the corresponding position and the magnetic portion 53 may be activated. Depending on the situation, the rod portion 531 may extend such that the permanent magnet 533 is located close to the workpiece to precisely lift a single workpiece.

The transfer portion 5 may lift the workpiece via the magnetic portion 53. Once the workpiece is lifted by the magnetic portion 53, the finger portion 51 may grip the workpiece.

When the finger portion 51 grips the workpiece, the guide portion 6 may move away from the transfer portion 5 in the longitudinal direction of the base 1 to fully lift the workpiece from both sides of its center.

Specifically, the guide portion 6 may be positioned on both sides of the transfer portion 5 and adjacent thereto when the finger portion 51 grips the workpiece. At this time, the pincer portion 61 may close such that the workpiece is positioned between the roller portions 62. When the pincer portion 61 is closed, the workpiece may be held between the roller portions 62, preventing the workpiece from escaping from the guide portion 6.

While maintaining the closed state, the guide portion 6 may move away from the transfer portion 5. At this time, the guide portion rail 43 is activated and the guide portion 6 may move away from the transfer portion 5.

The workpieces stacked in the receiving portion 2 may be entangled with each other. Because the workpieces are long, they may become disordered when the bundle is loosened. The workpiece to be transferred is selected based on the position detected near the transfer portion 5, and its end may be located below other workpieces.

Even if the transfer portion 5 grips the workpiece with the finger portion 51, interference from other workpieces may occur since the transfer portion 5 is positioned at the center of the feeding machine. Therefore, when the guide portion 6 moves away from the transfer portion 5 and lifts the workpiece up to its end, the workpiece may be safely separated.

After the workpiece has been lifted and gripped by the finger portion 51, the transfer portion 5 may move toward the seating portion 3. At this time, the finger portion 51 of the transfer portion 5 may open, thereby dropping the workpiece onto the seating portion 3. If the workpiece does not drop due to magnetic force from the magnetic portion 53, the contact portion 521 of the sensor portion 52 may descend to separate the workpiece from the transfer portion 5.

In summary, the feeding machine according to an embodiment of the present disclosure may be a feeding machine for supplying a workpiece to a bending machine, and may comprise a base, a receiving portion provided on the base to define a space in which the workpiece is loaded, a seating portion provided on the base on which the workpieces fed to the bending machine are sequentially seated, a transfer portion configured to grip the workpiece in the receiving portion from the center of the base and move it to the seating portion and a position adjusting portion configured to enable the transfer portion to move in a front-rear direction of the base.

That is, the transfer portion 5 may descend toward the receiving portion 2 and, when contacting the highest-positioned workpiece, may ascend to avoid further contact. Thereafter, the transfer portion 5 may move in the front-rear direction to identify the position of the workpiece located at the height where it was previously contacted. When there are multiple workpieces located at the highest position, the second position sensing portion 524 determines the first sensed workpiece as the target.

Even when the guide portion 6 operates, if the end of the workpiece is still covered by other workpieces and not fully lifted, the pincer portion 61 may open and drop the workpiece back into the pile. In such cases, the feeding machine 100 may start over to grip a new workpiece.

The transfer portion 5 may move to the position of the workpiece located at the previously contacted height and lift the workpiece via the magnetic portion 53. After the finger portion 51 grips the workpiece, the transfer portion 5 may move toward the seating portion 3 and remove the workpiece from the transfer portion.

When removing the workpiece from the transfer portion 5, the finger portion 51 may open. After the finger portion 51 opens, the contact portion 521 may descend or the magnetic portion 53 may ascend, as needed, to discharge the workpiece to the seating portion 3.

While the representative embodiments of the present invention have been described in detail above, it will be understood by those skilled in the art that various modifications can be made to the described embodiments without departing from the scope of the present invention.

Therefore, the scope of the present invention should not be limited to the described embodiments, but should be defined by the claims and their equivalents.

## Claims

1. A feeding machine for feeding a workpiece to a bending machine, comprising:
a base;
a receiving portion provided on the base to form a space in which the workpiece is loaded;
a seating portion provided on the base, on which the workpieces fed to the bending machine are sequentially seated;
a transfer portion configured to grip the workpiece in the receiving portion from the center of the base and move it to the seating portion; and
a position adjusting portion configured to allow the transfer portion to move in a front-rear direction of the base.

2. The feeding machine of claim 1,
wherein the transfer portion comprises a sensor portion for sensing a workpiece to be gripped, a magnetic portion for lifting the workpiece, and a finger portion for holding the lifted workpiece, and
wherein the transfer portion is configured to ascend and descend.

3. The feeding machine of claim 2,
wherein the sensor portion comprises a contact portion configured to descend to contact and detect the workpiece, and an extension portion connected to the contact portion, the extension portion being configured such that when the contact portion comes into contact with the highest-positioned workpiece among the workpieces, the contact portion is moved upward by the workpiece and the extension portion is ascended together with the contact portion to detect the position of the workpiece.

4. The feeding machine of claim 1,
wherein the magnetic portion comprises: a permanent magnet configured to lift the workpiece by magnetic force, and
a rod portion configured to allow the permanent magnet to ascend and descend.

5. The feeding machine of claim 1,
wherein the feeding machine further comprises a guide portion located at both ends of the transfer portion, the guide portion being configured to move in a direction away from the transfer portion from both sides of the portion of the workpiece gripped by the transfer portion.

6. The feeding machine of claim 3,
wherein the transfer portion is configured to descend toward the receiving portion and ascend when the transfer portion comes into contact with the highest-positioned workpiece among the workpieces so as to avoid contact,
wherein the transfer portion is further configured to move in the front-rear direction to determine the position of the workpiece located at the height where contact occurred,
wherein the transfer portion is further configured to move to the position of the workpiece located at that height and lift the workpiece via the magnetic portion, and
wherein after the finger portion grips the workpiece, the transfer portion moves toward the seating portion to remove the workpiece from the transfer portion.

7. The feeding machine of claim 6,
wherein the finger portion is opened to release the workpiece from the transfer portion, and
after the finger portion is opened, the contact portion is descended or the magnetic portion is ascended as necessary to discharge the workpiece to the seating portion.

8. A control method of a feeding machine comprising a base, a receiving portion provided on the base to define a space in which the workpiece is loaded, a seating portion provided on the base on which the workpieces fed to the bending machine are sequentially seated, a transfer portion configured to grip the workpiece in the receiving portion from the center of the base and move it to the seating portion, and a position adjusting portion configured to enable the transfer portion to move in a front-rear direction of the base, wherein the sensor portion comprises a contact portion configured to descend to contact and detect the workpiece and an extension portion connected to the contact portion, the extension portion being configured such that when the contact portion comes into contact with the highest-positioned workpiece among the workpieces,the contact portion is moved upward by the workpiece and the extension portion is moved upward together with the contact portion to detect the position of the workpiece,
causing the transfer portion to descend toward the receiving portion, and when it contacts the highest-positioned workpiece, causing the transfer portion to ascend to avoid contact with the workpiece;
moving the transfer portion in the front-rear direction to identify the position of the workpiece located at the contact height;
moving the transfer portion to the identified position and lifting the workpiece via the magnetic portion; and
after the finger portion grips the workpiece, transferring the workpiece to the seating portion and removing it from the transfer portion.
